# EUROPÄISCHE PATENTSCHRIFT

(11) **EP 0 476 277 B1**
(45) Veröffentlichungstag und Bekanntmachung des Hinweises auf die Patenterteilung: **19.04.1995**
(21) Anmeldenummer: 91112730.6
(22) Anmeldetag: 29.07.1991
(51) Int. Cl.: C04B 41/48, C04B 41/63, C04B 14/40, C09D 133/02, C09D 125/08

(54) **Verfahren zum Sanieren von asbestfaserhaltigen Flächenelementen, vorzugsweise Bauelementen wie Platten, Wänden und Wellplatten**
Process for rehabilitating asbestos fibre containing structural elements, preferably panels, walls and corrugated slabs
Procédé pour la réhabilitation des éléments de structure contenant des fibres d'amiante, de préférence d'éléments de construction comme des paneaux, parois et profils ondulés courbes

(30) Priorität: 20.09.1990 DE 4029830
(43) Veröffentlichungstag der Anmeldung: 25.03.1992
(73) Patentinhaber: T.I.B.-CHEMIE GMBH, D-68219 Mannheim (DE)
(72) Erfinder: Schenke, Detlef, W-6921 Epfenbach (DE); Lemmert, Karlheinz, W-6832 Hockenheim (DE)
(74) Vertreter: Ratzel, Gerhard, Dr.

(56) Entgegenhaltungen:
- GB-A- 759 801
- GB-A- 917 418
- GB-A- 1 398 282
- GB-A- 2 204 308
- US-A- 3 870 546

## Beschreibung

Bekanntlich ist die Sanierung von asbesthaltigen Elementen und Produkten zu einem großen Umweltproblem geworden, für dessen Lösung bereits Vorschläge vorliegen, die aber in Einzelfällen noch nicht als optimale Lösung angesehen werden können.

Der Fachmann unterscheidet zwischen sogenannten "schwach" und "fest" gebundenen Asbestfaserprodukten, wobei man unter den erstgenannten beispielsweise Asbestspritzputz, asbesthaltige Platten und Asbestpappen, die sich vorzugsweise im Innern von Gebäuden befinden, versteht.

Fest gebundene Asbestzementprodukte sind beispielsweise Weilasbestplatten als Dacheindeckung, Fassadenplatten und Brandschutzmörtel.

Zum nächstkommenden Stand der Technik gehört die sogenannte Schutzbehandlung der Oberflächen dieser asbestfaserhaltigen Produkte, insbesondere asbestfaserhaltiger Flächenelemente und Bauelemente, bei der die Oberfläche der Produkte versiegelt wird. Es wurden Schutzstofflösungen entwickelt, die bis zur Tiefe von 0,5 mm in die Produktoberfläche eindringen. Dabei soll diese Schutzversiegelung auf der Oberfläche einen Film bilden, damit alle noch freiliegenden Fasern oder Faserenden eingebunden werden.

Dabei muß gemäß des Standes der Technik mit gelösten Harzen gearbeitet werden.

Da die Reinigung der Flächen von asbesthaltigen Baustoffen ein erhebliches und unnötiges Risiko ist, wird bei diesem Verfahren des Standes der Technik auf eine solche Reinigung verzichtet; es genügt die Fläche so wie sie ist, mit der Imprägnierlösung aus gelösten Harzen zu behandeln, weil sowohl der Staub auf der Oberfläche als auch die Fasern mit eingebunden werden.

Nun bringt aber die großflächige Auftragung von gelösten Harzen bekanntlich wieder Umweltprobleme mit sich, da die organischen Lösungsmittel verdunsten und sowohl für die Anwender als auch für die Umwelt eine Belastung darstellen.

Durch US-A 3,870,546 wurde eine Zweikomponenten-Beschichtungsmasse bekannt, wobei für die innere Schicht Acrylsäure und die äußere Polyethylen-Acrylat zur Anwendung kommt und welche Masse zwecks Erreichung einer einheitlichen Formgebung mit dem zu behandelnden Material, während des Härteprozesses, einer thermischen Behandlung bei Temperaturen zwischen 275°F (135°C) und 600°F (316°C) unterzogen wird.

Der zuständige Fachmann entnimmt aus GB-A 750,801, daß zur Herstellung von beschichteten, asbestzementhaltigen Produkten, diese, nach thermischer Behandlung und in noch verformbarem Zustand, unter Verwendung von wasserlöslichen Polymerisaten, beschichtet werden oder aber die asbestzementhaltigen Produkte in einer ersten Verfahrensstufe beschichtet und dann in einer 2. Verfahrensstufe der thermischen Behandlung unterzogen werden.

Es hat sich gezeigt, daß durch die Schutzbehandlung des Standes der Technik, unter Verwendung von Versiegelungsmitteln auf der Basis gelöster Harze, keineswegs in allen Anwendungsfällen, eine befriedigende Sanierung möglich ist, da diese Versiegelungslösung, insbesondere bei starker Verschmutzung der Oberflächen, keine durchgehende Deckung sicherstellt. Die bisweilen starke Verschmutzung der Oberflächen wird ja bei dem Verfahren des Standes der Technik auf der Oberfläche belassen, um nicht durch Schmutz-Beseitigungsverfahren nachteiligerweise Asbestfasern freizusetzen.

Die gleiche Vorsichtsmaßnahme wird auch beim Erfindungsgegenstand durchgeführt d.h. das erfindungsgemäße Sanierungsverfahren geht auch davon aus, daß die zu sanierenden Flächen nicht von ihrer Verunreinigungsbedeckung befreit werden bzw. befreit werden müssen. Es werden also auch nach dem erfindungsgemäßen Verfahren sogenannte unbehandelte d.h. ungereinigte Flächen saniert.

Diese Verunreinigungen auf den Oberflächen der asbestfaserhaltigen Produkte bestehen beispielsweise aus anorganischen Verunreinigungen wie sand- oder kohlehaltigen Partikeln bzw. aus organischen Verunreinigungen wie beispielsweise Moos- oder Flechtenauflagen.

Alle diese Auflagen werden im Rahmen vorliegender Offenbarung als "Verunreinigungen" bezeichnet.

Die in der ersten Verfahrensstufe aufzubringende wässrige bzw. wassergelöste Copolymerisat-Dispersion ist nach einer bevorzugten Ausführungsform von niedrig viskosem Charakter und hat sowohl Verfestiger-Eigenschaften bezüglich von Asbestfaser-Partikeln, die mehr oder weniger noch im Bauelement bzw. Flächenelement verankert sind oder die auch, was häufig unerkannt der Fall ist, bereits ganz oder fast ganz auf den Oberflächen freiliegen.

Es handelt sich hier also um eine sogenannte faserbindende Verfestigung. Diese Copolymerisatschicht hat ferner sogenannte Primer-Eigenschaften, da sie eine bezüglich des folgenden Aufbringes des Langzeit-Witterungsschutzes, eine besonders beschichtungsfähige Oberfläche schafft.

Ein weiterer Vorteil dieser erfindungsgemäß anzuwendenden Copolymerisat-Schicht besteht darin, daß sie die Struktur der sogenannten Verunreinigungen verändert d.h. es werden die Einzelpartikel der anorganischen und/oder organischen Verunreinigungen miteinander verklebt und gleichzeitig wird die Oberfläche der Verunreinigungspartikel gleichfalls mit dem Copolymerisat versehen.

Dabei ist zu beachten, daß der Begriff "Verunreinigung" nicht nur die oben genannten anorganischen und organischen Verunreinigungen umfasst, sondern auch das Ergebnis jeglicher Verwitterungs-Prozesse, da bekanntlich die verwitterten Oberflächen Einzelpartikel freisetzen, die mit Recht ebenfalls als Verunreinigungen bezeichnet werden können. Man hat es beispielsweise bei verwitterten Platten mit solchen zu tun, deren Oberflächenschicht sich sowohl in physikalischer als auch in chemischer Beziehung von der Beschaffenheit der Restplatte unterscheiden. So zeigt beispielsweise ein Schnitt durch eine verwitterte Platte, daß die obere Schicht wesentlich weicher ist als der sogenannte Kern der keinerlei Verwitterungs- und Zersetzungserscheinungen gegebenenfalls unter Absplitterung kleinster Partikel, aufweist.

Die Verwitterung ist naturgemäß insbesondere ein Produkt der Beeinflussung durch feuchte Luft, Sonneneinstrahlung, insbesondere Ultravioletlicht-Einstrahlung und Wasser, insbesondere durch sogenannten sauren Regen.

Ergänzend ist daraufhinzuweisen, daß insbesondere die oben genannten organischen Verunreinigungen, wie Moose oder Flechte, häufig unter Erzielung eines sehr unerwünschten "Verwitterungseffekts" in die Oberflächen der Plattenelemente einwachsen.

Das erfindungsgemäß sanierte asbestfaserhaltige Produkt kann in gewissen Zeitabständen gewartet werden, wobei insbesondere beim Vorhandensein eines zweilagigen Langzeit-Witterungsschutzes eine wie auch immer geartete Beeinträchtigung der oberen Schicht beim Vorliegen farblich unterschiedlicher Schichten leicht erkannt und gegebenenfalls durch Aufbringen einer Reparaturschicht leicht sanierbar ist.

Solche Langzeit-Witterungsschutzstoffe stehen dem Fachmann auch bezüglich jeder gewünschten Elastizität des fertigen Witterungsschutzes zur Verfügung.

Die oben aufgeführte Aufgabe bzw. das oben genannte technische Problem wird bei dem gattungsmäßigen Verfahren zum Sanieren von asbestfaserhaltigen Produkten, wie Wellasbestplatten und Fassadenplatten erfindungsgemäß dadurch gelöst, daß man in einer ersten Verfahrensstufe auf die Oberfläche der unbehandelten (= ungereinigten) Produkte einer wässrigen Lösung bzw. wässrigen Dispersion eines wasserlöslichen Polymers auf Acrylsäure-Styrol-Basis aufbringt und daß man sodann in einer zweiten Verfahrensstufe mindestens eine Schicht eines Witterungsschutzstoffes aus einer wässrigen Lösung bzw. wässrigen Dispersion eines wasserlöslichen Polymers auf der Basis von Methacrylsäureester aufgibt, wobei man auf die Oberfläche der ungereinigten Produkte in einer ersten Verfahrensstufe eine wäßrige Lösung bzw. Dispersion eines wasserlöslichen Copolymers auf Acrylsäure-Styrol-Basis und sodann in einer 2. Verfahrensstufe mindestens eine Schicht eines Witterungsschutzstoffes aus einer wäßrigen Lösung bzw. Dispersion eines wasserlöslichen Polymers auf der Basis von Methacrylsäureester aufgibt, wobei die Lösung in der 1. Verfahrensstufe neben Zusatzstoffen 45 - 90 Gew.-% des wasserlöslichen Copolymers auf der Basis von Acrylsäure-Styrol und die wäßrige Lösung in der 2. Verfahrensstufe neben Zusatzstoffen 25 - 50 Gew.-% des wasserlöslichen Polymers auf Methacrylsäureester-Basis enthält.

Eine bevorzugte Ausführungsform ist dadurch gekennzeichnet, daß die in erster Verfahrensstufe aufzutragende Lösung bzw. Dispersion zusätzlich wasserlösliche algicide Mittel auf der Basis organischer carboxylgruppenhaltiger bzw. hydroxylgruppenhaltiger aliphatischer Verbindungen und/oder Farbpigmente und/oder oberflächenaktive Mittel enthält.

Eine weitere bevorzugte Ausführungsform ist dadurch gekennzeichnet, daß die in erster Verfahrensstufe aufzubringende wässrige Lösung bzw. Dispersion als oberflächenaktive Mittel Alkalisalze von Phosphaten und/oder schaumbremsende und/oder dispersionsstabilisierende Mittel enhält.

Eine weitere bevorzugte Ausführungsform ist dadurch gekennzeichnet, daß der in zweiter Stufe aufzubringende Witterungsschutzstoff zusätzlich in Wasser praktisch unlösliche algicide Mittel und/oder Farbpigmente und/oder mineralische Stoffe und/oder Metalloxide der Erdalkalimetalle und/oder des Aluminiums und/oder oberflächenaktive und/oder schaumbremsende und/oder dispersionsstabilisierende und/oder verdickende Mittel enthält.

Ferner ist eine weitere bevorzugte Ausführungsform dadurch gekennzeichnet, daß der Witterungsschutzstoff Alkalisalze von Phosphaten und/oder Acrylaten und/oder Hydroxylgruppen enthaltende Ester enhält.

Im folgenden wird nun ein Ausführungsbeispiel, das eine bevorzugte Ausführungsform beschreibt, aufgeführt:

### Beispiel

Die in erster Verfahrensstufe aufzubringende wässrige Dispersion setzt sich aus 45 bis 90 % des wasserlöslichen Polymers auf Acrylsäure-Styrol-Basis, 0,1 bis 8 % wasserlöslichem algicidem Mittel auf der Basis organischer carboxylgruppenhaltiger bzw. hydroxylgruppenhaltiger aliphatischer Verbindungen, 0,1 bis 8 % Farbpigmenten, 1 bis 8 % oberflächenaktivem Mittel, Rest Wasser zusammen. (Prozentangaben sind Gewichts-Prozente)
Der in zweiter Verfahrensstufe aufzubringende Witterungsschutzstoff setzt sich aus 25 bis 50 % des wasserlöslichen Polymers auf der Basis von Methacrylsäureester, 0,1 bis 1 % an in Wasser praktisch unlöslichem algicidem Mittel, 2 bis 15 % Farbpigmenten, insbesondere Metalloxiden von Eisen und Titan, 25 bis 45 % mineralische Stoffen bzw. Metalloxiden von Erdalkalimetallen und Aluminium, 1 bis 10 % an oberflächenaktiven und/oder schaumbremsenden, und/oder dispersionsstabilisierenden und/oder verdickenden Mitteln, insbesondere Alkalisalzen von Phosphaten und/oder des Acrylaten und/oder Hydroxylgruppen enthaltenden Ester, Rest Wasser, zusammen. (Prozentangaben sind Gewichts-Prozente)

## Patentansprüche

1. Zweistufiges Verfahren zum Sanieren von asbestfaserhaltigen Produkten, wie Wellasbestplatten als Dacheindeckung und Fassadenplatten,
dadurch gekennzeichnet,
daß man auf die Oberfläche der ungereinigten Produkte in einer ersten Verfahrensstufe eine wäßrige Lösung bzw. Dispersion eines wasserlöslichen Copolymers auf Acrylsäure-Styrol-Basis und sodann in einer 2. Verfahrensstufe mindestens eine Schicht eines Witterungsschutzstoffes aus einer wäßrigen Lösung bzw. Dispersion eines wasserlöslichen Polymers auf der Basis von Methacrylsäureester aufgibt, wobei die Lösung in der 1. Verfahrensstufe neben Zusatzstoffen 45 - 90 Gew.-% des wasserlöslichen Copolymers auf der Basis von Acrylsäure-Styrol und die wäßrige Lösung in der 2. Verfahrensstufe neben Zusatzstoffen 25 - 50 Gew.-% des wasserlöslichen Polymers auf Methacrylsäureester-Basis enthält.

2. Verfahren nach Anspruch 1,
dadurch gekennzeichnet,
daß die in erster Verfahrensstufe aufzutragende Lösung bzw. Dispersion zusätzlich wasserlösliche algicide Mittel auf der Basis organischer carboxylgruppenhaltiger bzw. hydroxylgruppenhaltiger aliphatischer Verbindungen und/oder Farbpigmente und/oder oberflächenaktive Mittel enthält.

3. Verfahren nach Anspruch 2,
dadurch gekennzeichnet,
daß die in erster Verfahrensstufe aufzubringende wässrige Lösung bzw. Dispersion als oberflächenaktive Mittel Alkalisalze von Phosphaten und/oder schaumbremsende und/oder dispersionsstabilisierende Mittel enthält.

4. Verfahren nach Anspruch 1,
dadurch gekennzeichnet,
daß der in zweiter Stufe aufzubringende Witterungsschutzstoff zusätzlich in Wasser unlösliche algicide Mittel und/oder Farbpigmente und/oder mineralische Stoffe und/oder Metalloxide der Erdalkalimetalle und/oder des Aluminiums und/oder oberflächenaktive und/oder schaumbremsende und/oder dispersionsstabilisierende und/oder verdickende Mittel enthält.

5. Verfahren nach Anspruch 4,
dadurch gekennzeichnet,
daß der Witterungsschutzstoff Alkalisalze von Phosphaten und/oder Acrylaten und/oder Hydroxylgruppen enthaltende Ester enthält.

6. Verfahren zum Sanieren von asbestfaserhaltigen Produkten nach Anspruch 1 bis 3,
dadurch gekennzeichnet,
daß sich die in erster Verfahrensstufe aufzubringende wäßrige Dispersion zusätzlich zu der Copolymerkomponente 0,1 bis 8 Gew.-% eines wasserlöslichen algiciden Mittels auf der Basis organischer carboxylgruppenhaltiger bzw. hydroxylgruppenhaltiger aliphatischer Verbindungen, 0,1 bis 8 Gew.-% Farbpigmente, 1 bis 8 Gew.-% eines oberflächenaktiven Mittels, Rest Wasser enthält.

7. Verfahren zum Sanieren nach Anspruch 1 sowie 4 und 5,
dadurch gekennzeichnet,
daß sich der in zweiter Verfahrensstufe aufzubringende Witterungsschutzstoff zusätzlich zur Methacrylester-Komponente 0,1 bis 1 Gew.-% an in Wasser unlöslichem algicidem Mittel,2 bis 15 Gew.-% Farbpigmenten, insbesondere Metalloxiden von Eisen und Titan, 25 bis 45 Gew.-% mineralischen Stoffen bzw. Metalloxiden von Erdalkalimetallen und Aluminium, 1 bis 10 Gew.-% an oberflächenaktiven und/oder schaumbremsenden, und/oder dispersionsstabilisierenden und/oder verdickenden Mitteln, insbesondere Alkalisalzen von Phosphaten und/oder des Acrylaten und/oder Hydroxylgruppen enthaltenden Ester, Rest Wasser, enthält.

## Claims

1. A two-stage process for stabilising products containing asbestos fibres, such as corrugated asbestos sheets used as roof coverings and façade panels, characterised in that, in a first process stage, an aqueous solution or dispersion of a water-soluble copolymer with an acrylic acid-styrene base is applied to the surface of the uncleaned products and then, in a second process stage, at least one layer of a weather-protection substance consisting of an aqueous solution or dispersion of a water-soluble polymer with a methacrylic acid ester base is applied thereto, the solution in the first process stage containing, in addition to additives, 45 to 90 % by weight of the acrylic acid-styrene based water-soluble copolymer and the aqueous solution in the second process stage containing, in addition to additives, 25 - 50 % by weight of the methacrylic acid ester based water-soluble polymer.

2. A process according to Claim 1, characterised in that the solution or dispersion to be applied in the first process stage additionally contains water-soluble algicide agents based on aliphatic compounds containing organic carboxyl groups or hydroxyl groups and/or coloured pigments and/or surface-active agents.

3. A process according to Claim 2, characterised in that the aqueous solution or dispersion to be applied in the first process stage contains as surface-active agents alkali salts of phosphates and/or foam-retarding and/or dispersion-stabilising agents.

4. A process according to Claim 1, characterised in that the weather-protection substance to be applied in the second stage additionally contains algicide agents insoluble in water and/or coloured pigments and/or mineral substances and/or metal oxides of alkaline earth metals and/or of aluminium and/or surface-active and/or foam-retarding and/or dispersion-stabilising and/or thickening agents.

5. A process according to Claim 4, characterised in that the weather-protection substance contains alkali salts of phosphates and/or esters containing acrylates and/or hydroxyl groups.

6. A process for stabilising products containing asbestos fibres according to Claims 1 to 3, characterised in that the aqueous dispersion to be applied in the first process stage contains, in addition to the copolymer component, 0.1 to 8 % by weight of a water-soluble algicide agent based on aliphatic compounds containing organic carboxyl groups or hydroxyl groups, 0.1 to 8 % by weight of coloured pigments, 1 to 8 % of a surface-active agent and the remainder water.

7. A process for stabilising according to Claims 1 and 4 and 5, characterised in that the weather-protection substance to be applied in the second stage contains, in addition to the methacrylic ester component, 0.1 to 1 % by weight of an algicide agent insoluble in water, 2 to 15 % by weight of coloured pigments, in particular metal oxides of iron and titanium, 25 to 45 % by weight of mineral substances or metal oxides of alkaline earth metals and aluminium, 1 to 10 % by weight of surface-active and/or foam-retarding and/or dispersion-stabilising and/or thickening agents, in particular alkali salts of phosphates and/or of the ester containing acrylates and/or hydroxyl groups, the remainder water.

## Revendications

1. Procédé à deux étapes pour l'assainissement des produits contenant des fibres d'amiante, comme des plaques ondulées de fibrociment comme couverture pour les toits et des plaques pour façades, caractérisé en ce que, lors d'une première étape de procédé, on applique, sur la surface des produits non purifiés, une solution ou une dispersion aqueuse d'un copolymère hydrosoluble à base d'acide acrylique-styrène, et ensuite, lors d'une deuxième étape de procédé, on applique au moins une couche d'un matériau de protection contre les agents atmosphériques, constitué d'une solution ou d'une dispersion aqueuse d'un polymère hydrosoluble à base d'ester de l'acide méthacrylique, la solution utilisée lors de la première étape de procédé contenant de 45 à 90 % en poids de copolymère hydrosoluble à base d'acide acrylique-styrène, en plus des additifs, et la solution aqueuse utilisée lors de la deuxième étape de procédé contenant de 25 à 50 % en poids de polymère hydrosoluble à base d'ester de l'acide méthacrylique.

2. Procédé selon la revendication 1, caractérisé en ce que la solution ou la dispersion à appliquer lors de la première étape de procédé contient, en outre, des algicides solubles dans l'eau, à base de composés aliphatiques contenant des groupes carboxyles organiques ou des groupes hydroxyles et/ou des pigments colorés et/ou des agents tensio-actifs.

3. Procédé selon la revendication 2, caractérisé en ce que la solution ou la dispersion aqueuse à appliquer lors de la première étape de procédé contient, comme agents tensio-actifs, des sels alcalins de phosphates et/ou des agents freinant la formation de mousse et/ou des agents stabilisant la dispersion.

4. Procédé selon la revendication 1, caractérisé en ce que le matériau de protection contre les agents atmosphériques, à appliquer lors de la deuxième étape, contient, en outre, des algicides insolubles dans l'eau et/ou des pigments colorés et/ou des substances minérales et/ou des oxydes métalliques des métaux alcalino-terreux et/ou de l'aluminium et/ou des agents tensio-actifs et/ou des agents freinant la formation de mousse et/ou des agents stabilisant la dispersion et/ou des agents épaississants.

5. Procédé selon la revendication 4, caractérisé en ce que le matériau de protection contre les agents atmosphériques contient des sels alcalins de phosphates et/ou d'acrylates et/ou des esters contenant des groupes hydroxyles.

6. Procédé d'assainissement des produits contenant des fibres d'amiante selon l'une des revendications 1 à 3, caractérisé en ce que la dispersion aqueuse à appliquer lors de la première étape de procédé contient, en plus du composant copolymère, de 0,1 à 8 % en poids d'un algicide hydrosoluble à base de composés aliphatiques contenant des groupes carboxyles organiques ou contenant des groupes hydroxyles, 0,1 à 8 % en poids de pigments colorés, 1 à 8 % en poids d'un agent tensio-actif, le reste étant constitué d'eau.

7. Procédé d'assainissement selon la revendication 1 et les revendications 4 et 5, caractérisé en ce que le matériau de protection contre les agents atmosphériques, à appliquer lors de la deuxième étape de procédé, contient, en plus du composant ester méthacrylique, de 0,1 à 1 % en poids d'algicide insoluble dans l'eau, 2 à 15 % en poids de pigments colorés, notamment des oxydes métalliques du fer et du titane, 25 à 45 % en poids de substances minérales et d'oxydes métalliques des métaux alcalino-terreux et de l'aluminium, 1 à 10 % en poids d'agents tensio-actifs et/ou d'agents freinant la formation de mousse et/ou d'agents stabilisant la dispersion et/ou d'agents épaississants, notamment des sels alcalins de phosphates et/ou d'acrylates et/ou des esters contenant des groupes hydroxyles, le reste étant constitué d'eau.
